# FASCICULE DE BREVET EUROPEEN

(11) **EP 3 428 841 B1**
(45) Date de publication et mention de la délivrance du brevet: **18.03.2020**
(21) Numéro de dépôt: 18177812.7
(22) Date de dépôt: 14.06.2018
(51) Int. Cl.: G06K 9/00, G06F 21/32

(54) **PROCÉDÉ DE DÉTECTION DE FRAUDE LORS D`UNE RECONNAISSANCE D'IRIS**
VERFAHREN ZUR DETEKTION VON BETRUG BEI EINER IRIS-ERKENNUNG
METHOD FOR FRAUD DETECTION DURING IRIS RECOGNITION

(30) Priorité: 13.07.2017 FR 1756716
(43) Date de publication de la demande: 16.01.2019
(73) Titulaire: Idemia Identity & Security France, 92400 Courbevoie (FR)
(72) Inventeur: JAROSZ, Hervé, 92400 COURBEVOIE (FR); KRICHEN, Emine, 92400 COURBEVOIE (FR); BRAUN, Jean-Noël, 92400 COURBEVOIE (FR)
(74) Mandataire: Prouvez, Julien

(56) Documents cités:
- US-A1- 2011 206 243
- US-A1- 2016 171 323
- JUKKA KOMULAINEN ET AL: "Contact lens detection in iris images", IEEE INTERNATIONAL JOINT CONFERENCE ON BIOMETRICS, 1 novembre 2016 (2016-11-01), pages 1-7, XP055452253, DOI: 10.1109/BTAS.2014.6996237

## Description

### DOMAINE DE L'INVENTION

L'invention concerne le domaine de l'identification par reconnaissance d'iris et plus particulièrement un procédé de détection d'une tentative de fraude d'un tel mode d'identification.

### ARRIERE PLAN DE L'INVENTION

Un procédé par reconnaissance d'iris classique comprend une étape de capturer une image d'un œil d'une personne à identifier et d'en extraire un ensemble de caractéristiques. Ces caractéristiques sont ensuite comparées à un fichier de caractéristiques enregistrées associées à des identifiants de personnes afin de vérifier si la personne à identifier figure dans ce fichier. Ce fichier peut regrouper des personnes considérées indésirables (« nongrata ») ou disposant de droits (d'accès par exemple) particuliers. Le port de lentilles cosmétiques (par opposition à des lentilles correctrices), comme par exemple des lentilles modifiant la couleur ou la forme de l'iris, peut rendre difficile voire impossible l'identification de la personne à identifier. Le port de telles lentilles permet une fraude lors d'une identification par reconnaissance d'iris.

### OBJET DE L'INVENTION

L'invention a pour objet d'améliorer la fiabilité d'une identification par reconnaissance d'iris.

### RESUME DE L'INVENTION

A cet effet, on prévoit un procédé de détection d'une fraude lors d'une identification par reconnaissance d'iris, le procédé comprenant les étapes suivantes :
- capturer une image de chaque œil d'une personne à identifier, à savoir une première image et une deuxième image ;
- extraire un premier ensemble de premières caractéristiques de la première image ;
- extraire un deuxième ensemble de deuxièmes caractéristiques de la deuxième image ;

- évaluer un coefficient de corrélation entre les premières et les deuxièmes caractéristiques ;
- en fonction de la valeur du coefficient de corrélation, signaler une tentative de fraude ou poursuivre l'identification par reconnaissance d'iris.

On obtient ainsi un procédé qui permet d'identifier une personne qui porterait des lentilles cosmétiques aux fins de frauder une identification par reconnaissance d'iris. L'utilisation d'une identification de caractéristiques fortement corrélées entre les deux yeux permet de reconnaître des éléments artificiels et donc de caractériser une tentative de dissimulation des iris.

Les lentilles cosmétiques reproduisant souvent des motifs identiques sur une même lentille, la détection d'une tentative de fraude est accélérée lorsque l'extraction du premier ensemble de premières caractéristiques et/ou du deuxième ensemble de deuxièmes caractéristiques est suivie d'une étape d'évaluer des corrélations au sein du premier ensemble de premières caractéristiques et/ou du deuxième ensemble de deuxièmes caractéristiques. L'évaluation des corrélations dans l'image est notablement accélérée lorsqu'elle comprend une étape d'évaluer la corrélation entre les caractéristiques de deux régions de l'image, les régions étant décalées angulairement par rapport à un centre estimé de l'iris.

Avantageusement encore, l'évaluation des corrélations au sein du premier ensemble de premières caractéristiques et/ou du deuxième ensemble de deuxièmes caractéristiques comprend une évaluation de corrélation des caractéristiques se situant sur une même direction passant par un centre estimé de l'iris. Ceci permet d'identifier rapidement un port de lentilles cosmétiques dont les motifs seraient identiques le long d'une direction passant par le centre de l'iris.

Le procédé de l'invention aboutit à une détection plus rapide de fraude lorsque :
- l'extraction du premier ensemble de premières caractéristiques est suivie d'une étape d'évaluer des corrélations au sein du premier ensemble de premières caractéristiques et de sélectionner un premier sous-ensemble de premières caractéristiques dont le coefficient de corrélation est supérieur à une première valeur prédéterminée;
- l'extraction du deuxième ensemble de deuxièmes caractéristiques de la deuxième image est suivie d'une étape d'évaluer des corrélations au sein du deuxième ensemble de deuxièmes caractéristiques et de sélectionner un deuxième sous-ensemble de deuxièmes caractéristiques dont le coefficient de corrélation est supérieur à une deuxième valeur prédéterminée. A l'issue de ces étapes, le procédé comprend une étape d'évaluer une corrélation entre des premières caractéristiques du premier sous-ensemble et des deuxièmes caractéristiques du deuxième sous-ensemble.

Une détection rapide du port de lentilles est possible lorsque le procédé comprend une étape supplémentaire de réaliser une mesure d'une dimension de l'un au moins des iris, suivie d'une étape de comparer la mesure avec une valeur de référence. Cette mesure permet d'identifier les lentilles cosmétiques qui ont un diamètre supérieur au diamètre moyen de l'iris humain.

Comme une lentille peut s'excentrer de l'iris sur lequel elle est posée, le procédé selon l'invention est plus efficace lorsque l'extraction du premier ensemble de premières caractéristiques et/ou du deuxième ensemble de deuxièmes caractéristiques comprend une étape préliminaire de détecter un contour sensiblement circulaire correspondant à une frontière externe de l'iris. Cette caractéristique permet d'accélérer encore le procédé de l'invention lorsque le premier et/ou deuxième ensemble de caractéristiques est extrait suivant une direction radiale soit du centre estimé de l'iris vers le contour (63, 73) de l'iris soit du contour de l'iris vers le centre estimé de l'iris. La détection de fraude est encore améliorée lorsque le procédé de l'invention comprend une étape de comparer les premières caractéristiques et/ou les deuxièmes caractéristiques avec des caractéristiques enregistrées représentatives de tentatives de fraude.

L'invention concerne également un terminal d'identification comprenant des moyens de capture d'une image de chaque iris d'une personne à identifier, des moyens d'analyse de ces images et une interface agencée pour signaler une détection de fraude, le terminal étant agencé pour mettre en œuvre le procédé décrit plus haut.

D'autres caractéristiques et avantages de l'invention ressortiront à la lecture qui suit de modes de réalisation particuliers non limitatifs de l'invention.

### BREVE DESCRIPTION DES DESSINS

Il sera fait référence aux figures annexées parmi lesquelles :
- la figure 1 est une vue schématique d'un terminal d'identification selon l'invention ;
- la figure 2, est une vue schématique d'une première étape du procédé selon l'invention ;
- la figure 3 est une vue schématique d'une première image capturée par le procédé de l'invention ;
- la figure 4 est une vue schématique d'une deuxième image capturée par le procédé de l'invention ;
- la figure 5 est une vue schématique de la première image traitée par le procédé de l'invention ;
- la figure 6 est une vue schématique de la deuxième image traitée par le procédé de l'invention ;
- la figure 7 est un logigramme des étapes du procédé de l'invention.

### DESCRIPTION DETAILLEE DE L'INVENTION

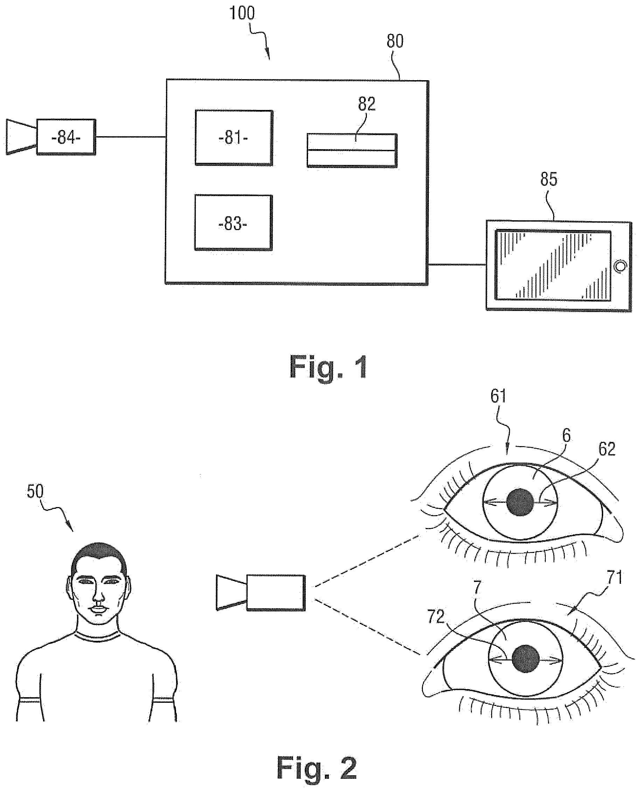

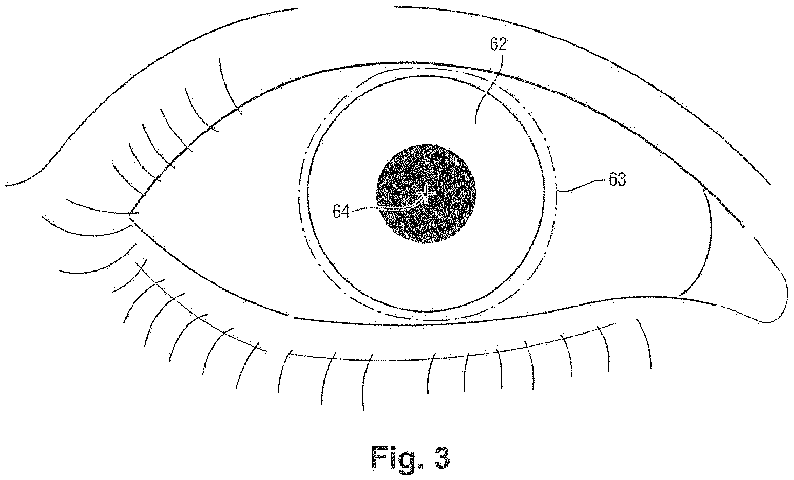

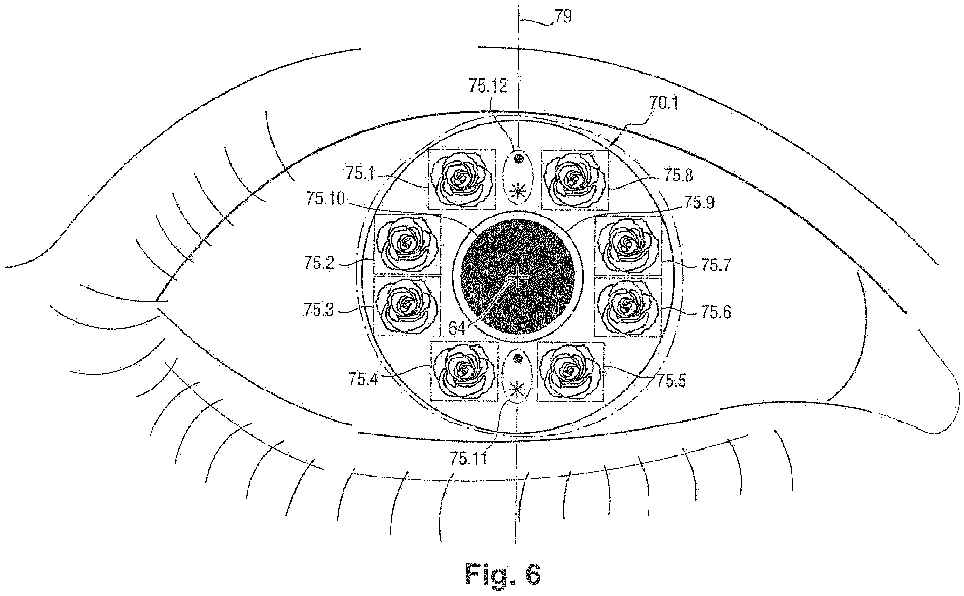

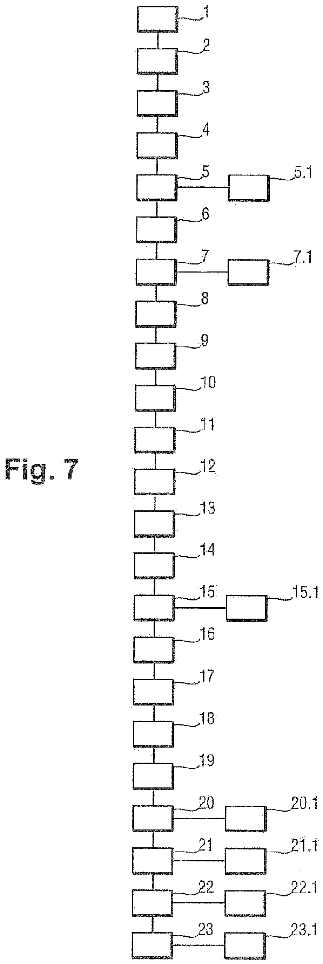

En référence aux figures 1 à 7, le procédé de détection d'une fraude selon l'invention est mis en œuvre par un terminal 100 de contrôle d'identité par reconnaissance d'iris. Le terminal 100 comprend une unité 80 de commande comprenant un module de traitement d'image 81, une mémoire 82 et un calculateur 83. Le terminal 100 est relié à une caméra 84 haute définition et à un écran tactile 85. A fins d'exemple, le procédé de l'invention sera décrit en application à la détection d'une fraude lors d'une identification par reconnaissance d'iris par l'utilisation de lentilles cosmétiques, ici des lentilles fantaisies 60.1 et 70.1, respectivement posées sur un premier iris 60 et un deuxième iris 70 d'une personne 50 à identifier.

Le procédé de détection de fraude est mis en œuvre par le terminal 100 qui exécute les étapes suivantes :
- étape 1 : capturer, grâce à la caméra 84, une image de chaque œil de la personne 50 à identifier, à savoir une première image 61 et une deuxième image 71 (figure 2);
- étape 2 : réaliser une première mesure 62 d'une dimension (ici le diamètre) du premier iris 60 sur la première image 61 ;

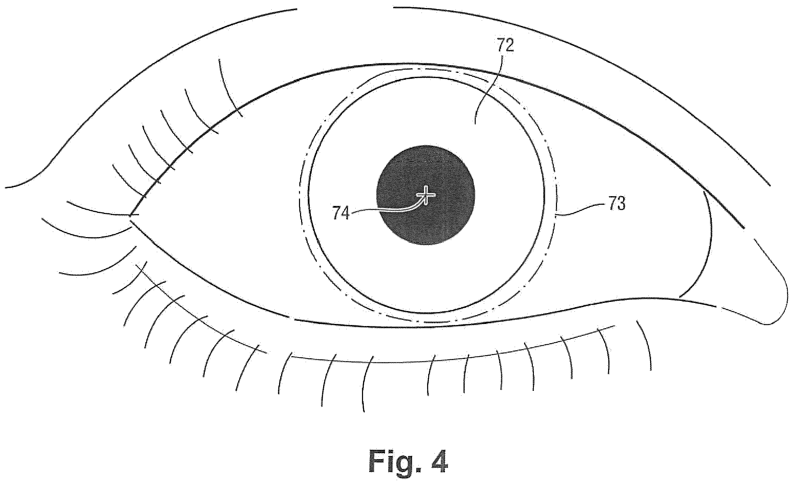

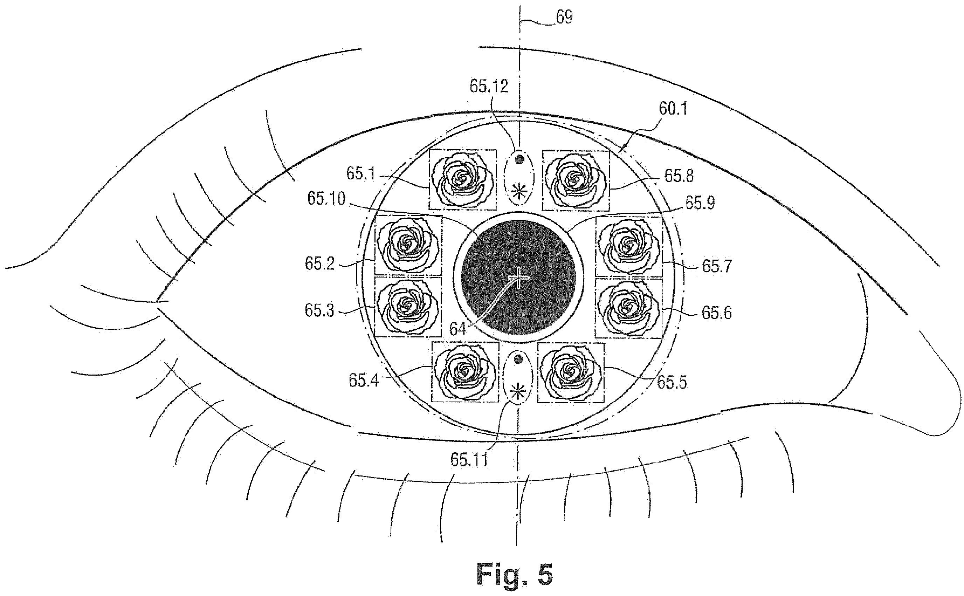

- étape 3 : réaliser une deuxième mesure 72 d'une dimension (ici le diamètre) du deuxième iris 70 sur la deuxième image 71 ;
- étape 4 : comparer la première mesure 62 avec une valeur 86 de référence, ici fixée à et exprimée en pixels d'image;
- étape 5 : lorsque la première mesure 62 est supérieure à la valeur 86 de référence, le terminal 100 détecte une probabilité que la personne 50 porte une lentille cosmétique sur le premier œil et signale via l'écran 85 une tentative de fraude (étape 5.1) ;
- étape 6 : comparer la deuxième mesure 72 avec une valeur 86 de référence, ici fixée à 11,6 mm et exprimée en pixels d'image;
- étape 7 : lorsque la deuxième mesure 72 est supérieure à la valeur 86 de référence, le terminal 100 détecte une probabilité que la personne 50 porte une lentille cosmétique sur le deuxième œil et signale via l'écran 85 une tentative de fraude (étape 7.1);
- étape 8 : détecter dans la première image 61 un premier contour 63 sensiblement circulaire correspondant à la frontière externe du premier iris 60 ;
- étape 9 : estimer dans la première image 61 la position du centre 64 du premier iris 60 ;
- étape 10 : réaliser une segmentation de la première image 61 en partant du centre 64 vers le premier contour 63 du premier iris 60 . Cette segmentation est, ici, réalisée par décomposition/fusion et aboutit à l'identification de plusieurs régions 65.1 à 65.12 (figure 4);
- étape 11 : détecter dans la deuxième image 71 un deuxième contour 73 sensiblement circulaire correspondant à la frontière externe du deuxième iris 70 ;
- étape 12 : estimer dans la deuxième image 71 la position du centre 74 du deuxième iris 70 ;
- étape 13 : réaliser une segmentation de la deuxième image 71 en partant du centre 74 vers le premier contour 73 du deuxième iris 70. Cette segmentation est, ici, réalisée par décomposition/fusion et aboutit à l'identification de plusieurs régions 75.1 à 75.12 (figure 5).

Selon une étape 14, le module de traitement d'image 81 extrait un premier ensemble 66 de premiers descripteurs 67 préférentiellement de type Iris code de la première image 61. Selon une étape 15, le calculateur 83 évalue des corrélations entre les premiers descripteurs 67 du premier ensemble 66. Dans le cas où deux ou plusieurs descripteurs 67 ont un coefficient de corrélation supérieur à un seuil 90, le terminal 100 détecte une probabilité que la personne 50 porte une lentille cosmétique sur l'œil représenté sur la première image et signale via l'écran 85 une tentative de fraude (étape 15.1).

Selon une étape 16, le module de traitement d'image 81 extrait un deuxième ensemble 76 de deuxièmes descripteurs 77 SIFT de la deuxième image 71. Selon une étape 17, le calculateur 83 évalue des corrélations entre les deuxièmes descripteurs 77 du deuxième ensemble 76. Dans le cas où deux ou plusieurs deuxièmes descripteurs 77 ont un coefficient de corrélation supérieur au seuil 90, le terminal 100 détecte une probabilité que la personne 50 porte une lentille cosmétique sur l'œil représenté sur la deuxième image et signale via l'écran 85 une tentative de fraude (étape 17.1).

L'étape 15 d'évaluation des corrélations entre les premiers descripteurs 67 comprend une étape 15.2 d'évaluer la corrélation entre l'un au moins des premiers descripteurs 67 attaché à une première région du premier iris 60 -ici le premier descripteur 67.1 attaché à la région 65.1- et au moins un autre des premiers descripteurs 67 attaché à une deuxième région décalée angulairement de la première région par rapport au centre 64 estimé du premier iris 60- ici le premier descripteur 67.2 attaché à la région 65.2. Dans l'exemple retenu d'une personne 50 portant une lentille 60.1 à motifs floraux, le calculateur 83 identifie une corrélation supérieure au seuil 90 entre les descripteurs 67.1 à 67.8 attachés aux régions 65.1 à 65.8. Cette forte corrélation traduit la répétition des motifs floraux de la lentille 60.1 et caractérise une tentative de fraude. Le terminal 100 signale alors une tentative de fraude (étape 15.1).

L'étape 17 d'évaluation des corrélations entre les deuxièmes descripteurs 77 comprend une étape 17.2 d'évaluer la corrélation entre au moins l'un des deuxièmes descripteurs 77 attaché à une troisième région du deuxième iris 70 -ici le deuxième descripteur 77.1 attaché à la région 75.1- et au moins un autre des deuxièmes descripteurs 77 attaché à une quatrième région décalée angulairement de la troisième région par rapport au centre 74 estimé du deuxième iris 70- ici le deuxième descripteur 77.2 attaché à la région 75.2. Dans l'exemple retenu d'une personne 50 portant une lentille 70.1 à motifs floraux, le calculateur 83 identifie une corrélation supérieure au seuil 90 entre les descripteurs 77.1 à 77.8 attachés aux régions 75.1 à 75.8. Cette forte corrélation traduit la répétition des motifs floraux de la lentille 70.1 et caractérise une tentative de fraude. Le terminal 100 signale alors une tentative de fraude (étape 17.1).

Selon une étape 18, le calculateur 83 sélectionne, parmi le premier ensemble 66 de premiers descripteurs 67, un premier sous-ensemble 68 comprenant les descripteurs 67.1 à 67.8 dont le coefficient de corrélation est supérieur au seuil 90. Selon une étape 19, le calculateur 83 sélectionne également, parmi le deuxième ensemble 76 de deuxièmes descripteurs 77, un deuxième sous-ensemble 78 comprenant les descripteurs 77.1 à 77.8 dont le coefficient de corrélation est supérieur au seuil 90.

Selon une étape 20, le calculateur 83 évalue un coefficient de corrélation entre les premiers descripteurs 67.1 à 67.8 du premier sous-ensemble 68 et les deuxièmes descripteurs 77.1 à 77.8 du deuxième sous-ensemble 78. Dans l'exemple retenu, le calculateur 83 détermine un fort coefficient de corrélation (ici, supérieur à 70 %) entre chaque premier descripteur 67.1 à 67.8 du premier sous-ensemble 68 et chaque deuxième descripteur 77.1 à 77.8 du deuxième sous-ensemble 78. Cette forte corrélation traduit le fait que chaque œil de la personne 50 porte une lentille 60.1 et 70.1 identique (comme c'est généralement le cas pour les lentilles cosmétiques) et caractérise une tentative de fraude. Le terminal 100 signale alors une tentative de fraude (étape 20.1) . Dans le cas où le coefficient de corrélation est faible (inférieur à 70%), le procédé passe à l'étape 40 de poursuivre l'identification par reconnaissance d'iris.

Selon un second mode de réalisation, l'étape 15.2 d'évaluer la corrélation entre un des premiers descripteurs 67 attaché à une première région et un autre des premiers descripteurs 67 attaché à une deuxième région décalée angulairement par rapport au centre 64 estimé du premier iris 60 peut être remplacée par ou être doublée d'une étape 21 d'évaluation de corrélation des premiers descripteurs attachés à des zones se situant sur une même direction 69 passant par un centre estimé 64 du premier iris 60. Une telle étape 21 permet de rapidement détecter une répétition de motif selon une direction angulaire et d'identifier une caractéristique non naturelle. Lorsque le coefficient de corrélation entre des premiers descripteurs 67 du premier ensemble 66 - comme par exemple les premiers descripteurs 67.11 et 67.12 attachés aux zones 65.11 et 65.12 - est élevé (ici, supérieur à 70 %), le terminal 100 signale, via l'écran 85, une tentative de fraude (étape 21.1).

Des étapes 22 et 22.1 identiques aux étapes 21 et 21.1 s'appliquent aux deuxièmes descripteurs 77 du deuxième ensemble 76.

Au cours d'une étape supplémentaire 23 optionnelle, le calculateur 83 compare les premiers descripteurs 67 du premier ensemble 66 et les deuxièmes descripteurs 77 du deuxième ensemble 76 avec des descripteurs 87, enregistrés dans la mémoire 82 du terminal 100, qui correspondent à des descripteurs issus de lentilles cosmétiques connues et qui sont représentatives de tentatives de fraude. Lorsque le coefficient de corrélation entre un ou plusieurs des premiers ou deuxièmes descripteurs 67 ou 77 avec un ou plusieurs des descripteurs 87 est élevé (ici, supérieur à 70 %), le terminal 100 signale, via l'écran 85, une tentative de fraude (étape 23.1).

Bien entendu, l'invention n'est pas limitée aux modes de réalisation décrits mais englobe toute variante entrant dans le champ de l'invention telle que définie par les revendications.

En particulier,
- bien qu'ici le terminal comprenne une caméra haute définition, l'invention s'applique également à d'autres moyens de capture d'une image de chaque œil d'une personne à identifier comme par exemple un appareil photographique, un scanner, une caméra ultra haute définition ou basse définition ;
- bien qu'ici le terminal comprenne un module de traitement d'image, l'invention s'applique également à d'autres moyens d'analyse d'image comme par exemple un logiciel distinct de traitement d'image intégré au calculateur ou un module de reconnaissance d'image intégré à la caméra ;
- bien qu'ici le terminal comprenne un écran tactile, l'invention s'applique également à d'autres types d'interface agencée pour signaler une fraude comme par exemple un écran vidéo, une sirène, une ampoule ;
- bien qu'ici la valeur de référence à laquelle les mesures de diamètre d'iris sont comparées soit de 11,6 millimètres, l'invention s'applique également à d'autres valeurs de référence qui peuvent être exprimées en pixels ou autres unités dépendre des valeurs biométriques spécifiques à une population ou un environnement de capture ;
- bien qu'ici des opérations de mesure d'iris et de détection de contour d'iris soient menées, la mesure d'iris peut se faire également sans détection de contour d'iris ;
- bien qu'ici la segmentation de la première et de la deuxième image soit réalisée par décomposition/fusion, l'invention s'applique également à d'autres méthodes de segmentation d'images comme par exemple une méthode de croissance de région, une méthode par approche frontières ou par classification ou seuillage ;
- bien qu'ici le module de traitement d'image réalise une extraction de descripteurs de type Iris code, l'invention s'applique également à d'autres types de premières et deuxièmes caractéristiques des première et deuxième images comme par exemple des descripteurs SIFT, BRIEF, ORB ou BRISK ;
- bien qu'ici l'évaluation des corrélations entre les caractéristiques d'une même image soit menée entre des descripteurs attachés à des région décalées angulairement par rapport à un centre estimé de l'iris ou situées sur une direction passant par un centre estimé de l'iris, l'invention s'applique également à une l'évaluation des corrélations entre les caractéristiques d'une même image menée entre des descripteurs attachés à des régions issues d'une segmentation différente ou à des régions prises au hasard ;
- bien qu'ici on réalise une sélection d'un premier sous-ensemble parmi les premières caractéristiques de la première image et une sélection d'un deuxième sous-ensemble parmi les deuxièmes caractéristiques de la deuxième image, et qu'ensuite on réalise une évaluation des corrélations des caractéristiques du premier sous-ensemble avec celles du deuxième sous-ensemble, l'invention s'applique également à une évaluation des corrélations entre les premières caractéristiques et les deuxièmes caractéristiques sans sélection préalable de sous-ensembles ;
   - bien qu'ici une corrélation entre deux caractéristiques soit considérée comme forte lorsque le coefficient de corrélation est supérieur à 70%, l'invention s'applique également à d'autres valeurs de ce coefficient qui peut être adapté en fonctions conditions de capture ou d'autres paramètres, et peut prendre une valeur supérieure ou inférieure à 70% ;
- bien qu'ici la segmentation des images en vue d'extraire les caractéristiques se fasse suivant une direction radiale en partant du contour de l'iris vers le centre de l'iris, l'invention s'applique également à une extraction des ensembles de caractéristiques suivant une direction radiale depuis le centre estimé de l'iris vers le contour de l'iris.

## Revendications

1. Procédé de détection d'une fraude lors d'une identification par reconnaissance d'iris, le procédé comprenant les étapes suivantes :
- capturer une première image (61) d'un premier iris et une deuxième image (71) d'un deuxième iris d'une personne à identifier (50),;
- extraire un premier ensemble (66) de premières caractéristiques (67) de la première image (61);
- extraire un deuxième ensemble (76) de deuxièmes caractéristiques (77) de la deuxième image (71);
- évaluer un coefficient de corrélation entre les premières et les deuxièmes caractéristiques (67, 77) ;
- lorsque le coefficient de corrélation entre les premières et les deuxièmes caractéristiques (67, 77) est supérieur à un seuil (90) prédéterminé, signaler une tentative de fraude, dans le cas contraire poursuivre l'identification par reconnaissance d'iris.

2. Procédé selon la revendication 1, dans lequel l'extraction du premier ensemble (66) de premières caractéristiques (67) et/ou l'extraction du deuxième ensemble (76) de deuxièmes caractéristiques (77) est suivie d'une étape d'évaluer des corrélations au sein dudit ensemble de caractéristiques.

3. Procédé selon la revendication 2, dans lequel l'étape d'évaluer des corrélations au sein dudit ensemble (66, 76) de caractéristiques (67, 77) comprend une étape d'évaluer la corrélation entre les caractéristiques de deux régions (65.1-65.8, 75.1-75.8) de l'image (61, 71), les régions (65.1-65.8, 75.1-75.8) étant décalées angulairement par rapport à un centre estimé (64) de l'iris (60, 70) .

4. Procédé selon l'une des revendications 2 et 3, dans lequel l'étape d'évaluer des corrélations au sein dudit ensemble (66, 76) de premières caractéristiques (67, 77) comprend une évaluation de corrélation des caractéristiques (67, 77) se situant sur une même direction (69, 79) passant par un centre estimé (64, 74) de l'iris (60, 70).

5. Procédé selon la revendication 1, dans lequel ;
- l'extraction du premier ensemble (66) de premières caractéristiques (67) comprend une étape d'évaluer des corrélations au sein du premier ensemble (66) de premières caractéristiques (67) et de sélectionner un premier sous-ensemble (68) de premières caractéristiques (67) dont le coefficient de corrélation est supérieur à une première valeur prédéterminée (90);
- l'extraction du deuxième ensemble (76) de deuxièmes caractéristiques (77) comprend une étape d'évaluer des corrélations au sein du deuxième ensemble (76) de deuxièmes caractéristiques (77) et de sélectionner un deuxième sous-ensemble (78) de deuxièmes caractéristiques (77) dont le coefficient de corrélation est supérieur à une deuxième valeur prédéterminée (90);
le procédé comprenant une étape d'évaluer une corrélation entre des premières caractéristiques (67) du premier sous-ensemble (68) de premières caractéristiques (67) et des deuxièmes caractéristiques (77) du deuxième sous-ensemble (78) de deuxièmes caractéristiques (77).

6. Procédé selon l'une quelconque des revendications précédentes, comprenant une étape supplémentaire de réaliser une première mesure (62) d'une dimension de l'iris de la première image et/ou une deuxième mesure (72) d'une dimension de l'iris de la deuxième image suivie d'une étape de comparer la première et/ou la deuxième mesure (62, 72) avec une valeur de référence.

7. Procédé selon l'une quelconque des revendications précédentes, dans lequel l'extraction du premier ensemble (66) de premières caractéristiques (67) comprend une étape préliminaire de détecter un contour (63) sensiblement circulaire correspondant à une frontière externe de l'iris (60).

8. Procédé selon l'une quelconque des revendications précédentes, dans lequel l'extraction du deuxième ensemble (76) de deuxièmes caractéristiques (77) comprend une étape préliminaire de détecter un contour (73) sensiblement circulaire correspondant à une frontière externe de l'iris (70).

9. Procédé selon la revendication 7 ou 8, dans lequel le premier et/ou deuxième ensemble (66, 76) de caractéristiques est extrait suivant une direction radiale soit du centre estimé de l'iris (70) vers le contour (63, 73) de l'iris soit du contour de l'iris vers le centre estimé de l'iris.

10. Procédé selon l'une quelconque des revendications précédentes, comprenant une étape de comparer les premières caractéristiques (77) et/ou les deuxièmes caractéristiques (78) avec des caractéristiques enregistrées représentatives de tentatives de fraude.

11. Terminal d'identification (100) comprenant des moyens de capture (84) d'une image de chaque iris d'une personne à identifier (50), des moyens d'analyse (81) de ces images et une interface (85) agencée pour signaler une détection de fraude, le terminal (100) étant agencé pour mettre en œuvre le procédé selon l'une quelconque des revendications 1 à 10.

## Patentansprüche

1. Verfahren zur Detektion eines Betrugs während einer Identifizierung durch Iriserkennung, wobei das Verfahren die folgenden Schritte umfasst:
- Aufnehmen eines ersten Bildes (61) einer ersten Iris und eines zweiten Bildes (71) einer zweiten Iris einer zu identifizierenden Person (50);
- Extrahieren einer ersten Gruppe (66) von ersten Merkmalen (67) des ersten Bildes (61);
- Extrahieren einer zweiten Gruppe (76) von zweiten Merkmalen (77) des zweiten Bildes (71);
- Auswerten eines Korrelationskoeffizienten zwischen den ersten und den zweiten Merkmalen (67, 77);
- wenn der Korrelationskoeffizient zwischen den ersten und den zweiten Merkmalen (67, 77) größer als ein vorbestimmter Schwellenwert (90) ist, Signalisieren eines Betrugsversuchs, andernfalls Fortsetzen der Identifizierung durch Iriserkennung.

2. Verfahren nach Anspruch 1, bei dem auf die Extraktion der ersten Gruppe (66) von ersten Merkmalen (67) und/oder die Extraktion der zweiten Gruppe (76) von zweiten Merkmalen (77) ein Schritt des Auswertens der Korrelationen innerhalb der Gruppe von Merkmalen folgt.

3. Verfahren nach Anspruch 2, bei dem der Schritt des Auswertens der Korrelationen innerhalb der Gruppe (66, 76) von Merkmalen (67, 77) einen Schritt des Auswertens der Korrelation zwischen den Merkmalen von zwei Bereichen (65.1-65.8, 75.1-75.8) des Bildes (61, 71) umfasst, wobei die Bereiche (65.1-65.8, 75.1-75.8) in Bezug auf eine geschätzte Mitte (64) der Iris (60, 70) winkelversetzt sind.

4. Verfahren nach einem der Ansprüche 2 und 3, bei dem der Schritt des Auswertens der Korrelationen innerhalb der Gruppe (66, 76) von ersten Merkmalen (67, 77) eine Korrelationsauswertung der Merkmale (67, 77) umfasst, die sich in derselben Richtung (69, 79) befinden, die durch eine geschätzte Mitte (64, 74) der Iris (60, 70) geht.

5. Verfahren nach Anspruch 1, bei dem:
- die Extraktion der ersten Gruppe (66) von ersten Merkmalen (67) einen Schritt des Auswertens von Korrelationen innerhalb der ersten Gruppe (66) von ersten Merkmalen (67) und des Auswählens einer ersten Untergruppe (68) von ersten Merkmalen (67) umfasst, deren Korrelationskoeffizient größer als ein vorbestimmter erster Wert (90) ist;
- die Extraktion der zweiten Gruppe (76) von zweiten Merkmalen (77) einen Schritt des Auswertens von Korrelationen innerhalb der zweiten Gruppe (76) von zweiten Merkmalen (77) und des Auswählens einer zweiten Untergruppe (78) von zweiten Merkmalen (77) umfasst, deren Korrelationskoeffizient größer als ein vorbestimmter zweiter Wert (90) ist;
wobei das Verfahren einen Schritt des Auswertens einer Korrelation zwischen ersten Merkmalen (67) der ersten Untergruppe (68) von ersten Merkmalen (67) und zweiten Merkmalen (77) der zweiten Untergruppe (78) von zweiten Merkmalen (77) umfasst.

6. Verfahren nach einem der vorhergehenden Ansprüche, umfassend einen zusätzlichen Schritt des Durchführens einer ersten Messung (62) einer Abmessung der Iris des ersten Bildes und/oder einer zweiten Messung (72) einer Abmessung der Iris des zweiten Bildes gefolgt von einem Schritt des Vergleichens der ersten und/oder der zweiten Messung (62, 72) mit einem Referenzwert.

7. Verfahren nach einem der vorhergehenden Ansprüche, bei dem die Extraktion der ersten Gruppe (66) von ersten Merkmalen (67) einen vorbereitenden Schritt des Detektierens einer im Wesentlichen kreisförmigen Kontur (63) umfasst, die einer äußeren Begrenzung der Iris (60) entspricht.

8. Verfahren nach einem der vorhergehenden Ansprüche, bei dem die Extraktion der zweiten Gruppe (76) von zweiten Merkmalen (77) einen vorbereitenden Schritt des Detektierens einer im Wesentlichen kreisförmigen Kontur (73) umfasst, die einer äußeren Begrenzung der Iris (70) entspricht.

9. Verfahren nach Anspruch 7 oder 8, bei dem die erste und/oder zweite Gruppe (66, 76) von Merkmalen gemäß einer radialen Richtung entweder von der geschätzten Mitte der Iris (70) zur Kontur (63, 73) der Iris oder von der Kontur der Iris zur geschätzten Mitte der Iris extrahiert wird.

10. Verfahren nach einem der vorhergehenden Ansprüche, umfassend einen Schritt des Vergleichens der ersten Merkmale (77) und/oder der zweiten Merkmale (78) mit gespeicherten Merkmalen, die repräsentativ für Betrugsversuche sind.

11. Identifikationsterminal (100), umfassend Aufnahmemittel (84) zum Aufnehmen eines Bildes jeder Iris einer zu identifizierenden Person (50), Analysemittel (81) zum Analysieren dieser Bilder und einer Schnittstelle (85), die ausgebildet ist, um einen Betrugserfassung zu signalisieren, wobei der Terminal (100) ausgebildet ist, um das Verfahren nach einem der Ansprüche 1 bis 10 durchzuführen.

## Claims

1. A method of detecting fraud during identification by iris recognition, the method comprising the following steps:
- capturing a first image (61) of a first iris and a second image (71) of a second iris of a person for identification (50);
- extracting a first set (66) of first characteristics (67) from the first image (61);
- extracting a second set (76) of second characteristics (77) from the second image (71);
- evaluating a correlation coefficient between the first and second characteristics (67, 77); and
- when the correlation coefficient between the first and the second characteristics (67, 77) is greater than a predetermined threshold (90), signaling an attempt at fraud, otherwise continuing with identification by iris recognition.

2. A method according to claim 1, wherein the extraction of the first set (66) of first characteristics (67), and/or the extraction of the second set (76) of second characteristics (77) is followed by a step of evaluating correlations with said set of characteristics.

3. A method according to claim 2, wherein the step of evaluating the correlations within said set (66, 76) of characteristics (67, 77) comprises a step of evaluating the correlation between the characteristics of two regions (65.1-65.8, 75.1-75.8) of the image (61, 71), the regions (65.1-65.8, 75.1-75.8) being angularly offset relative to an estimated center (64) of the iris (60, 70) .

4. A method according to claim 2 or claim 3, wherein the step of evaluating correlations within said set (66, 76) of first characteristics (67, 77) comprises evaluating correlations of characteristics (67, 77) situated in a common direction (69, 79) passing through an estimated center (64, 74) of the iris (60, 70).

5. A method according to claim 1, wherein:
- extracting the first set (66) of first characteristics (67) comprises a step of evaluating correlations within the first set (66) of first characteristics (67) and of selecting a first subset (68) of first characteristics (67) for which the correlation coefficient is greater than a first predetermined value (90); and
- extracting the second set (76) of second characteristics (77) comprises a step of evaluating correlations within the second set (76) of second characteristics (77) and of selecting a second subset (78) of second characteristics (77) for which the correlation coefficient is greater than a second predetermined value (90); and
the method including a step of evaluating correlations between the first characteristics (67) of the first subset (68) of first characteristics (67) and second characteristics (77) of the second subset (78) of second characteristics (77).

6. A method according to any preceding claim, including an additional step of making a first measurement (62) of a dimension of the iris of the first image and/or a second measurement (72) of a dimension of the iris of the second image, followed by a step of comparing the first and/or second measurement (62, 72) with a reference value.

7. A method according to any preceding claim, wherein extracting the first set (66) of first characteristics (67) includes a preliminary step of detecting a substantially circular outline (63) corresponding to an outer boundary of the iris (60).

8. A method according to any preceding claim, wherein extracting the second set (76) of second characteristics (77) includes a preliminary step of detecting a substantially circular outline (73) corresponding to an outer boundary of the iris (70).

9. A method according to claim 7 or claim 8, wherein the first and/or second set (66, 76) of characteristics is extracted on a radial direction either going from the estimated center of the iris (60, 70) towards the outline (63, 73) of the iris, or from the outline of the iris towards the estimated center of the iris.

10. A method according to any preceding claim, including a step of comparing the first characteristics (77) and/or the second characteristics (78) with stored characteristics representative of attempts at fraud.

11. An identification terminal (100) including image capture means (84) for capturing an image of each iris of a person (50) for identification, analysis means (81) for analyzing the images, and an interface (85) arranged to signal a fraud detection, the terminal (100) being arranged to perform the method according to any one of claims 1 to 10.
